# NEUE EUROPÄISCHE PATENTSCHRIFT

(11) **EP 2 758 673 B2**
(45) Veröffentlichungstag und Bekanntmachung des Hinweises auf die Entscheidung über den Einspruch: **10.04.2019**
(45) Hinweis auf die Patenterteilung: 02.03.2016
(21) Anmeldenummer: 12762200.9
(22) Anmeldetag: 17.08.2012
(51) Int. Cl.: F15B 15/14, F16D 25/08

(54) **ARBEITSZYLINDER, INSBESONDERE NEHMERZYLINDER EINES AUSRÜCKSYSTEMS**
WORKING CYLINDER, IN PARTICULAR SLAVE CYLINDER FOR A RELEASE SYSTEM
VÉRIN, EN PARTICULIER RÉCEPTEUR POUR UN SYSTÈME DE DÉBRAYAGE

(30) Priorität: 22.09.2011 DE 102011083187
(43) Veröffentlichungstag der Anmeldung: 30.07.2014
(73) Patentinhaber: Schaeffler Technologies AG & Co. KG, 91074 Herzogenaurach (DE)
(72) Erfinder: BOSNJAK, Daniel, F-67470 Seltz (FR); KRAHTOV, Luben, 76530 Baden-Baden (DE); SCHWAB, Stefan, 76437 Rastatt (DE)
(74) Vertreter: Winter, Brandl, Fürniss, Hübner, Röss, Kaiser, Polte - Partnerschaft mbB
(86) Internationale Anmeldenummer: PCT/DE2012/000833
(87) Internationale Veröffentlichungsnummer: WO 2013/041071

(56) Entgegenhaltungen:
- DE-A1- 10 039 242
- DE-A1- 10 039 242
- DE-A1-102010 053 945
- JP-A- 9 217 708
- JP-A- H09 217 708

## Beschreibung

Die Erfindung betrifft einen Nehmerzylinder eines Ausrücksystems bzw. CSC (Concentric Slave Cylinder) eines Fahrzeuges mit mehreren darin axial verschiebbaren Kolben in zylindrischer oder anderer Form.

Aus dem Stand der Technik sind Fluidzuführungen über Bohrungen im Gehäuse oder über Kanäle im Gehäuse bekannt, die mit zusätzlichen Teilen durch Ultraschallschweißen abgedichtet werden. Bei Fluiddurchführung durch Bohrungen bei Verwendung von zwei Kolben wird meistens in zwei Ebenen gearbeitet, eine Ebene für das erste Kolbensystem und eine andere Ebene für das zweite Kolbensystem. Dies erhöht den axialen Bauraum. Ein weiterer Nachteil besteht darin, dass bei komplexen Geometrien die Dichtigkeit der Schweißnaht durch das Ultraschallschweißen nicht zuverlässig gewährleistet werden kann.

Es ist weiterhin bekannt, bei einem Arbeitszylinder einer hydraulischen Strecke für die Kupplungsbetätigung, beispielsweise bei einem als so genannter CSC (Concentric Slave Cylinder) ausgebildeten Nehmerzylinder zur Vermeidung des Austritts von Fluid an der Verbindungsstelle zum zu verbindenden Bauteil den Zwischenraum zwischen dem Arbeitszylinder und dem Bauteil statisch abzudichten. Dazu wird eine ringförmige, elastische Dichtung aus Kunststoff im Bereich der Durchgangsbohrung, durch die die Getriebeeingangswelle hindurchgeht, in eine dafür in der Stirnfläche des Nehmerzylinders vorgesehene Nut eingebracht. Allerdings kann es bereits während der Herstellung der Verbindung von Getriebegehäuse und Nehmerzylinder bzw. auch während des Betriebes des Fahrzeuges dazu kommen, dass dieser Dichtring aus der vorgegebenen Nut herausspringt und es dadurch zur Undichtheit an der Verbindungsstelle kommt.

In der Druckschrift DE 10 2006 060 016 A1 wird eine Flachdichtung beschrieben, die insbesondere zur Verwendung in einer Axialkolbenmaschine vorgesehen ist, eine Mehrzahl von Durchgangsbohrungen zum Hindurchführen von Druckleitungen aufweist. Dabei ist jede einzelne der Durchgangsbohrungen mit einer umlaufenden Sicke versehen. Eine zweite umlaufende Sicke ist vorgesehen, welche alle ersten umlaufenden Sicken umgibt. Die Sicken sind dabei in einen plattenförmigen Grundkörper der Flachdichtung eingeprägt. Des Weiteren sind zweite Durchgangsbohrungen, welche Zentrierstifte des angrenzenden Ventilgehäuses aufnehmen und mit Haltenasen abgedeckt sind, sowie dritte Durchgangsbohrungen für Schrauben vorgesehen, um das Ventilgehäuse mit einem Pumpenkörper fest zu verbinden. Konstruktionsbedingt benötigt die Axialkolbenmaschine einen erhöhten axialen Bauraum.

Eine Dichtungseinrichtung zur Abdichtung eines Dichtspalts zwischen Bauteildichtflächen von Maschinenbauteilen, wobei in zumindest einer der Bauteildichtflächen fluidführende Kanäle vorhanden sind, mit einer zwischen die Bauteildichtflächen einpressbaren Flachdichtung, welche zumindest Durchgangsöffnungen für den Durchtritt von Fluid besitzt, ist aus der Druckschrift DE 10 2010 053 945 A1 bekannt. Bei dieser Lösung ist auf jeder der Bauteildichtflächen wenigstens eine Abdichtkontur angeordnet, welche bei eingepresster Flachdichtung die fluidführenden Kanäle gegeneinander und/oder gegenüber der Umgebung abdichtet. Die Fertigung der komplizierten Dichtungsstrukturen ist dabei relativ aufwendig und es kann ebenfalls zu Undichheiten des Systems kommen.

Aufgabe der Erfindung ist es, einen Nehmerzylinder eines Ausrücksystems bzw. CSC (Concentric Slave Cylinder) eines Fahrzeuges mit einer Abdeckung für Fluidkanäle zu entwickeln, welcher eine zuverlässige Abdichtung bei einem einfachen konstruktiven Aufbau gewährleistet und dabei auf einen zusätzlichen axialen Bauraum verzichtet.

Diese Aufgabe wird mit den kennzeichnenden Merkmalen des ersten Patentanspruchs gelöst.

Vorteilhafte Ausgestaltungen ergeben sich aus den Unteransprüchen.

Der Nehmerzylinder eines Kupplungsausrücksystems eines Fahrzeuges weist in einer Stirnfläche eines Gehäuses des Nehmerzylinders Fluidkanäle auf, wobei jeweils einem in einer Ausnehmung des Gehäuses (1) axial verschiebbar angeordneten Kolben mindestens ein Fluidkanal zugeordnet ist und erfindungsgemäß zumindest ein in der Stirnfläche ausgebildeter erster Fluidkanal mittels einer ersten Platte, deren Kontur der Kontur des ersten Fluidkanals angepasst ist, fluidmitteldicht verschlossen ist. Durch die Verwendung einer Platte, die in dem Fluidkanal befestigt ist, kann der Berstdruck im Vergleich zu herkömmlichen Dichtungseinrichtungen erheblich erhöht werden. Weiterhin reduziert sich die Leckrate gegen Null. Weiterhin ermöglicht die neue erfindungsgemäße Art der Abdichtung des Fluidkanals ein sicheres und zuverlässiges Abgrenzen/Trennen der fluidführenden Kanäle untereinander sowie gegenüber der Umgebung. Gleichzeitig wird auch eine längere Betriebsdauer möglich.

Die Platte wird mit dem Gehäuse insbesondere stoffschlüssig durch Kleben oder Schweißen verbunden. Bevorzugt wird dabei jeweils in jedem Kanal eine Platte angeordnet und durch Laserschweißen fluidmitteldicht befestigt.

Dabei werden zum Beispiel die erste Platte durch ihre Umfangskontur und die umfangsseitige Fläche des in die Stirnfläche eingebrachten ersten Fluidkanals und eine zweite Platte durch ihre Umfangskontur und die umfangsseitigen Flächen eines in die Stirnfläche eingebrachten zweiten Fluidkanals geführt und zentriert. Die Fluidkanäle weisen einen Bodenbereich auf, auf welchem die Platten mit ihrer Unterseite aufliegen.

Jede Platte wird nach deren Einlegen in den entsprechenden Fluidkanal mit dem Gehäuse im Bereich ihrer aneinandergrenzenden umfangsseitigen Flächen/Konturen und/oder im Bodenbereich durch Laserschweißen mit dem Gehäuse verbunden.

Der erste Fluidkanal und der zweite Fluidkanal liegen dabei in der Stirnfläche in einer Ebene, wodurch der axiale Bauraum des Nehmerzylinders begrenzt werden kann. Dabei sind die Fluidkanäle und die erste Platte und die zweite Platte voneinander zuverlässig getrennt.

Die Kolben können symmetrisch oder nicht symmetrisch ausgebildet und/oder angeordnet sein.

Mit der erfindungsgemäßen Lösung wird es auf einfache Art und Weise möglich, den axialen Bauraum eines Doppel-CSCs durch Verschließen der Fluidkanäle mittels jeweils einer Platte (alternativ mittels eines Deckels) zu reduzieren und dabei gleichzeitig die Fluidkanäle abzudichten und den Berstdruck sowie die Lebensdauer des Nehmerzylinders zu erhöhen.

Dabei werden die Fluidkanäle bevorzugt mittels Laserschweißen in dem Gehäuse mittels Platten in der Art von Schweißplatten versiegelt, welche die Form der Fluidkanäle im Gehäuse besitzen. Dadurch werden die Fluidkanäle abgedeckt und verschlossen. Beim Einsetzen der Fluidkanäle liegen die nach innen gerichteten Grundflächen der Schweißplatten an dem Bodenbereich der Fluidkanäle an. Eine seitliche Fixierung erfolgt über das Zusammenfallen der senkrechten umlaufenden Flächen der Fluidkanäle die mit den umlaufenden Flächen der Schweißplatten korrespondieren. Durch diese Fixierung und einen entsprechend geringen Spalt können die Schweißplatten mit Hilfe des Lasers verschweißt und damit am Gehäuse befestigt werden. Die Dichtheit des Verschweißens ist bei einem anderen Verfahren, wie z.B. Ultraschallschweißen nicht sicher gegeben.

Die Höhe der Platten (Schweißplatten) ist dabei der Tiefe der Fluidkanäle angepasst, so dass die Platten möglichst nicht über die Fluidkanäle hinausragen.

Die Erfindung wird nachfolgend anhand eines Ausführungsbeispiels und zugehöriger Zeichnungen näher erläutert.

Es zeigen:
- Figur 1: einen Längsschnitt eines Arbeitszylinders in Form eines Nehmerzylinders (Doppel CSC),
- Figur 2: den Querschnitt durch einen Nehmerzylinder gemäß Figur 1 durch die zwei Kolben,
- Figur 3: die Wege von Fluid und Luft durch die Fluidkanäle,
- Figur 4: die Vorderansicht des Doppel CSCs mit dem Verlauf der Fluidkanäle in der Stirnfläche des Gehäuses,
- Figur 5: eine dreidimensionale Ansicht des Nehmerzylinders aus Richtung der Stirnfläche,
- Figur 6: eine dreidimensionale Darstellung der Platten, die in Form von Schweißplatten ausgebildet sind,
- Figur 7: einen Längsschnitt durch eine im ersten Fluidkanal angeordnete erste Platte (Schweißplatte).

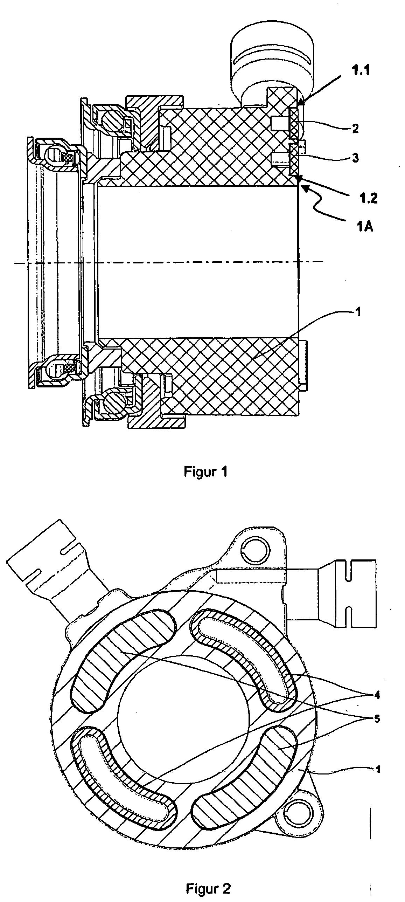

Gemäß Figur 1 wurden in das Gehäuse 1 eines Nehmerzylinders, der zwei (hier nicht ersichtliche) Kolben aufweist, aus Richtung dessen Stirnseite 1 A jeweils eine erste Platte 2 und eine zweite Platte 3 im Bereich eines ersten stirnseitigen Fluidkanals 1.1 und eines zweiten stirnseitigen Fluidkanals 1.2 in das Gehäuse 1 eingelegt und mittels Laserschweißen verschweißt. Es entsteht keine Überhöhung der ersten und zweiten Platte 2, 3 (Schweißplatten), die über die Stirnseite 1A des Gehäuses 1 hinausragt. Die ersten und zweiten Fluidkanäle 1.1, 1.2 sind durch die Schweißplatten (erste Platte 2, zweite Platte 3) fluidmitteldicht verschlossen. Die Verwendung eines herkömmlichen Deckels, der an die Stirnseite des Gehäuses anschließt und durch welchen herkömmliche Dichtungen befestigt werden, kann damit entfallen, wodurch der Nehmerzylinder axial kurz baut.

Figur 2 zeigt den Querschnitt durch das Gehäuse 1 des Nehmerzylinders mit 2x2 Kolben in Form eines ersten Kolbens 4 und eines zweiten Kolbens 5, die im Gehäuse 1 montiert sind. Die Kolben 4, 5 sind nicht symmetrisch ausgeführt und jeweils im Winkel von 90° zueinander angeordnet.

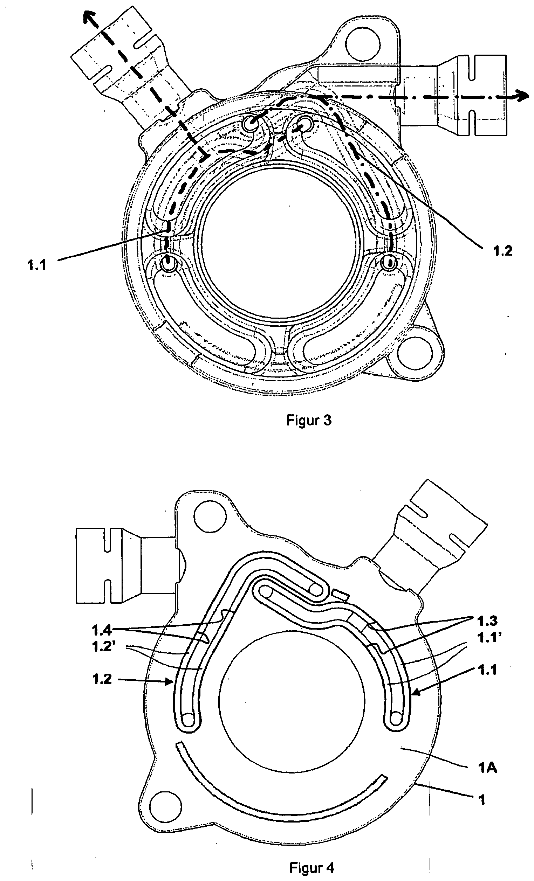

In Figur 3 sind die Wege des Fluides und der Luft durch die Fluidkanäle 1.1, 1.2 mittels Strichlinien angedeutet.

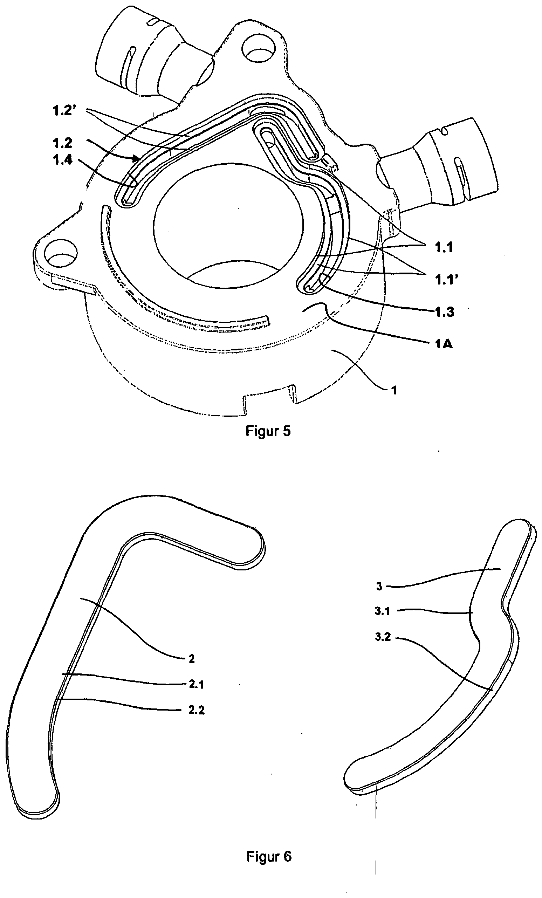

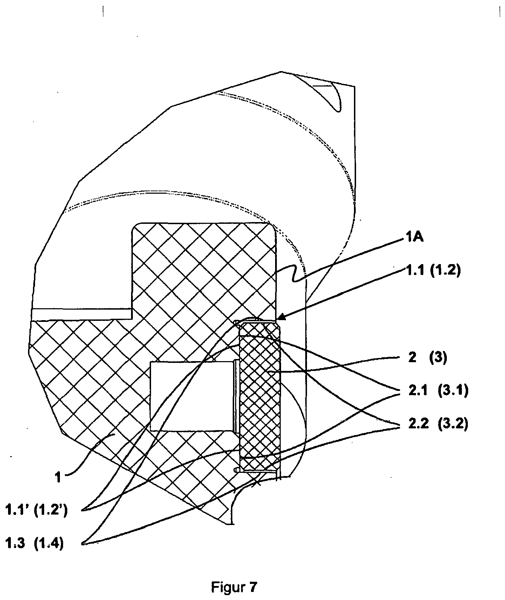

Die Figuren 4 und 5 zeigen in der Vorderansicht und in der dreidimensionalen Ansicht den Verlauf der Fluidkanäle 1.1, 1.2 in der Stirnfläche 1A des Gehäuses 1. Der erste Fluidkanal 1.1 und der zweite Fluidkanal 1.2 erstrecken sich in der Stirnfläche 1A in Form einer Nut, wobei der erste Fluidkanal 1.1 am Boden der Nut einen Bodenbereich 1.1' und der zweite Fluidkanal am Boden der Nut einen Bodenbereich 1.2' aufweisen. Umfangsseitig weisen der erste Fluidkanal 1.1 eine erste umfangsseitige Fläche 1.3 und der zweite Fluidkanal eine zweite umfangsseitige Fläche 1.4 auf. Es ist aus den Figuren 4 und 5 ersichtlich, dass eine Verschachtelung der in der Stirnseite eingebrachten Fluidzuführungen der Fluidkanäle 1.1, 1.2 in einer Ebene realisiert wird, so dass kein weiterer axialer Bauraum in Anspruch genommen wird. Dies erfolgt durch die speziell angepassten Fluidkanäle 1.1, 1.2, die mit zusätzlichen Teilen (bevorzugt in Form von Platten) in angepasster Form abgedeckt werden und mit dem Verfahren Laserschweißen versiegelt werden (s. Figuren 1 und 7).

Figur 6 zeigt eine erste Platte 2 und eine zweite Platte 3 in dreidimensionaler Darstellung, wobei die Platten 2, 3 in Form von Schweißplatten ausgebildet sind.

Die erste Platte 2 korrespondiert mit der Form des ersten Fluidkanals 1.1 in der Stirnseite 1A des Gehäuses 1 (s. Fig. 4 und 5) und die zweite Platte 2 mit der Form des zweiten Fluidkanals 1.2 in der Stirnseite 1A des Gehäuses 1 (s. Fig. 4 und 5)

Dazu weist die erste Schweißplatte 2 eine Umfangskontur 2.2 auf, die der ersten umfangsseitigen Fläche 1.3 des ersten Fluidkanals 1.1 entspricht und besitzt eine Grundfläche 2.1, die im eingebauten Zustand (s. Fig. 7) an dem Bodenbereich 1.1' des ersten in der Stirnfläche 1A eingebrachten Fluidkanals 1.1 anliegt.

Analog besitzt die zweite Schweißplatte 3 eine Umfangskontur 3.2, die der zweiten umfangsseitigen Fläche 1.4 des zweiten Fluidkanals 1.2 entspricht und besitzt eine Grundfläche 3.1, die im eingebauten Zustand an dem Bodenbereich 1.2' des in der Stirnfläche 1A eingebrachten zweiten Fluidkanals 1.2 anliegt. Dieser Einbauzustand wurde in Figur 7 mit in Klammern gesetzten Bezugszeichen dargestellt.

Die erste und zweite Platte 2, 3 werden in die Fluidkanäle eingelegt und den Fluidkanälen 1.1, 1.2 zentriert. Nun erfolgt durch das Laserschweißen das Befestigen der Platten 2, 3. Damit sind die Fluidkanäle 1.1, 1.2 dicht verschlossen und es kann die geforderte Dichtheit besser garantiert werden, als es beispielsweise beim Ultraschallschweißen möglich ist. Vorteilhaft sind ebenfalls die kleineren Abmessungen des Arbeitszylinders sowie die Garantie der Dichtigkeit des Lagers.

### Bezugszeichenliste

- 1: Gehäuse
- 1A: Stirnfläche des Gehäuses
- 1.1: erster Fluidkanal
- 1.2: zweiter Fluidkanal
- 1.3: erste umfangsseitige Fläche
- 1.4: zweite umfangsseitige Fläche
- 2: erste Platte
- 2.1: Grundfläche der ersten Platte
- 2.1: Umfangskontur der ersten Platte
- 3: zweite Platte
- 3.1: Grundfläche der zweiten Platte
- 3.2: Umfangskontur der zweiten Platte
- 4: erster Kolben
- 5: zweiter Kolben

## Patentansprüche

1. Nehmerzylinder eines Ausrücksystems eines Fahrzeuges, wobei in einer Stirnfläche (1A) eines Gehäuses (1) des Nehmerzylinders Fluidkanäle vorhanden sind, wobei jeweils einem in einer Ausnehmung des Gehäuses (1) axial verschiebbar angeordneten Kolben mindestens ein Fluidkanal zugeordnet ist, **dadurch gekennzeichnet, dass** zumindest ein in der Stirnfläche (1A) ausgebildeter erster Fluidkanal (1.1) mittels einer ersten Platte (2), deren Kontur der Kontur des ersten Fluidkanals (1.1) angepasst ist, fluidmitteldicht verschlossen ist.

2. Nehmerzylinder nach Anspruch 1, **dadurch gekennzeichnet, dass** die Platte mit dem Gehäuse (1) stoffschlüssig verbunden ist.

3. Nehmerzylinder nach Anspruch 1 oder 2, **dadurch gekennzeichnet, dass** die Platte mit dem Gehäuse (1) durch Kleben oder Schweißen verbunden ist.

4. Nehmerzylinder nach Anspruch 3, **dadurch gekennzeichnet, dass** jede in einem Fluidkanal angeordnete Platte durch Laserschweißen mit dem Gehäuse (1) verbunden ist.

5. Nehmerzylinder nach einem der Ansprüche 1 bis 4, **dadurch gekennzeichnet, dass** in jedem in die Stirnfläche (1A) eingebrachten Fluidkanal (1.1, 1.2) eine Platte angeordnet ist.

6. Nehmerzylinder nach einem der Ansprüche 1 bis 4 **dadurch gekennzeichnet, dass**
- die erste Platte (2) durch ihre Umfangskontur (2.2) und die umfangsseitigen Flächen (1.3) des in die Stirnfläche (1A) eingebrachten ersten Fluidkanals (1.1) und
- eine zweite Platte (3) durch Ihre Umfangskontur (3.2) und die umfangsseitigen Flächen (1.4) eines in die Stirnfläche (1A) eingebrachten zweiten Fluidkanals (1.2) geführt und zentriert werden.

7. Nehmerzylinder nach einem der Ansprüche 1 bis 6, **dadurch gekennzeichnet, dass** jeder Fluidkanal (1.1, 1.2) einen Bodenbereich (1.1', 1.2') aufweist, auf welchem eine Platte (2, 3) mit ihrer Unterseite aufliegt.

8. Nehmerzylinder nach einem der Ansprüche 1 bis 7, **dadurch gekennzeichnet, dass** jede Platte mit dem Gehäuse (1) im Bereich ihrer aneinandergrenzenden umfangsseitigen Flächen und/oder im Bodenbereich durch Laserschweißen verbunden ist.

9. Nehmerzylinder nach einem der Ansprüche 1 bis 8, **dadurch gekennzeichnet, dass** der erste Fluidkanal (1.1) und der zweite Fluidkanal (1.2) in der Stirnfläche einer Ebene liegen und durch die erste Platte (2) und die zweite Platte (3) voneinander getrennt sind.

10. Nehmerzylinder nach einem der Ansprüche 1 bis 9, **dadurch gekennzeichnet, dass** der erste Kolben (4) und der zweite Kolben (5) nicht symmetrisch ausgebildet und/oder angeordnet sind.

## Claims

1. Slave cylinder of a release system of a vehicle, there being fluid ducts in an end face (1A) of a housing (1) of the slave cylinder, in each case one piston which is arranged axially displaceably in a recess of the housing (1) being assigned at least one fluid duct, **characterized in that** at least one first fluid duct (1.1) which is configured in the end face (1A) is closed in a sealed manner with respect to the fluid medium by means of a first plate (2), the contour of which is adapted to the contour of the first fluid duct (1.1).

2. Slave cylinder according to claim 1, **characterized in that** the plate is connected in an integrally joined manner to the housing (1).

3. Slave cylinder according to Claim 1 or 2, **characterized in that** the plate is connected to the housing (1) by way of adhesive bonding or welding.

4. Slave cylinder according to claim 3, **characterized in that** each plate which is arranged in a fluid duct is connected to the housing (1) by way of laser welding.

5. Slave cylinder according to one of claims 1 to 4, **characterized in that** a plate is arranged in each fluid duct (1.1, 1.2) which is made in the end face (1A).

6. Slave cylinder according to one of claims 1 to 4, **characterized in that**
- the first plate (2) is guided and centred by way of its circumferential contour (2.2) and the circumference-side faces (1.3) of the first fluid duct (1.1) which is made in the end face (1A), and
- a second plate (3) is guided and centred by way of its circumferential contour (3.2) and the circumference-side faces (1.4) of a second fluid duct (1.2) which is made in the end face (1A).

7. Slave cylinder according to one of claims 1 to 6, **characterized in that** each fluid duct (1.1, 1.2) has a bottom region (1.1', 1.2'), on which a plate (2, 3) lies with its underside.

8. Slave cylinder according to one of claims 1 to 7, **characterized in that** each plate is connected to the housing (1) in the region of their circumference-side faces which adjoin one another and/or in the bottom region by way of laser welding.

9. Slave cylinder according to the of claims 1 to 8, **characterized in that** the first fluid duct (1.1) and the second fluid duct (1.2) lie in the end face of one plane and are separated from one another by the first plate (2) and the second plate (3).

10. Slave cylinder according the one of claims 1 to 9, **characterized in that** the first piston (4) and the second piston (5) are not configures and/or arranged symmetrically.

## Revendications

1. Cylindre récepteur d'un système de débrayage d'un véhicule, dans lequel, dans une surface frontale (1A) d'un boîtier (1) du cylindre récepteur, sont prévus des canaux de fluide, au moins un canal de fluide étant associé à chaque fois à un piston disposé de manière déplacable axialement dans un évidement du boîtier (1), **caractérisé en ce qu'**au moins un premier canal de fluide (1.1) réalisé dans la surface frontale (1A) est fermé de manière étanche aux fluides au moyen d'une première plaque (2) dont le contour est adapté au contour du premier canal de fluide (1.1).

2. Cylindre récepteur selon la revendication 1, **caractérisé en ce que** la plaque est raccordée au boîtier (1) par engagement par liaison de matière.

3. Cylindre récepteur selon la revendication 1 ou 2, **caractérisé en ce que** la plaque est raccordée au boîtier (1) par collage ou soudage.

4. Cylindre récepteur selon la revendication 3, **caractérisé en ce que** chaque plaque disposée dans un canal de fluide est raccordée au boîtier (1) par soudage au laser.

5. Cylindre récepteur selon l'une quelconque des revendications 1 à 4, **caractérisé en ce que** dans chaque canal de fluide (1.1, 1.2) pratiqué dans la surface frontale (1A) est disposée une plaque.

6. Cylindre récepteur selon l'une quelconque des revendications 1 à 4, **caractérisé en ce que**
- la première plaque (2) est guidée et centrée par son contour périphérique (2.2) et les surfaces du côte périphérique (1.3) du premier canal de fluide (1.1) pratiqué dans la surface frontale (1A) et
- une deuxième plaque (3) est guidée et centrée par son contour périphérique (3.2) et les surfaces du côté périphérique (1.4) d'un deuxième canal de fluide (1.2) pratiqué dans la surface frontale (1A).

7. Cylindre récepteur selon l'une quelconque des revendications 1 à 6, **caractérisé en ce que** chaque canal de fluide (1.1, 1.2) présente une région de fond (1.1', 1.2') sur laquelle repose une plaque (2, 3) par son côté inférieur.

8. Cylindre récepteur selon l'une quelconque des revendications 1 à 7, **caractérisé en ce que** chaque plaque est raccordée au boîtier (1) dans la région de ses surfaces adjacentes les unes aux autres du côté périphérique et/ou dans la région de fond par soudage au laser.

9. Cylindre récepteur selon l'une quelconque des revendications 1 à 8, **caractérisé en ce que** le premier canal de fluide (1.1) et le deuxième canal de fluide (1.2) sont situés dans la surface frontale d'un plan et sont séparés l'un de l'autre par la première plaque (2) et la deuxième plaque (3).

10. Cylindre récepteur selon l'une quelconque des revendications 1 à 9, **caractérisé en ce que** le premier piston (4) et le deuxième piston (5) ne sont pas réalisés et/ou disposés symétriquement.
